# EUROPEAN PATENT SPECIFICATION

(11) **EP 3 871 999 B1**
(45) Date of publication and mention of the grant of the patent: **27.08.2025**
(21) Application number: 19791162.1
(22) Date of filing: 02.09.2019
(51) Int. Cl.: B65D 83/00, G01F 11/02

(54) **DEVICE FOR APPLYING SELF-ADHESIVE CLEANING PRODUCTS**
VORRICHTUNG ZUM AUFTRAGEN VON SELBSTKLEBENDEN REINIGUNGSPRODUKTEN
DISPOSITIF POUR L'APPLICATION DE PRODUITS DE NETTOYAGE AUTOCOLLANTS

(30) Priority: 14.06.2019 BR 102019012278
(43) Date of publication of application: 01.09.2021
(73) Proprietor: JMC Administração E Participações LTDA, 95885-000 Imigrante (BR)
(72) Inventor: PREDIGER, Maciel, 95885-000 Imigrante (BR); BERTOLINI, Jurandir, 95885-000 Imigrante (BR)
(74) Representative: Ruo, Alessandro
(86) International application number: PCT/BR2019/050359
(87) International publication number: WO 2020/248030

(56) References cited:
- EP-A1- 2 363 354
- EP-B1- 2 361 850
- WO-A1-2004/043825
- CN-A- 106 467 195
- CN-A- 106 467 195
- FR-A- 1 156 298
- JP-A- 2013 091 506
- JP-A- 2016 124 594
- US-A1- 2007 007 302
- US-A1- 2011 033 224
- US-B2- 9 212 476

## Description

### Technical field

The following invention description relates to the development of a device for applying self-adhesive cleaning products, said device comprising a doser, an applicator, an internal plunger and a protective cap, such that the device allows the application of fractioned amounts of the product stored in the doser on a specific surface by the combined movement between the doser and the applicator.

### Background of the invention

Applicators for dosing self-adhesive products by means of a device with a syringe-like movement are widely known. One example of such an applicator can be seen in WO2004043825 which discloses a dispensing device for a viscous active substance preparation, particularly a gel-type active substance, comprising a receiving cylinder that provided with an open face and a face that encompasses a port for dispensing the active substance preparation, while being otherwise closed. This dispensing device further comprises a handling flange that is embodied on the outside of the open face, a piston that can be inserted into the receiving cylinder and provided with an advancing front face which runs inside the receiving cylinder when the piston is inserted and a rear pressure-generating face which exerts advancing pressure on the piston. The piston optionally encompasses a piston head which is disposed on the pressure-generating face and exerts pressure. The cross section of the piston essentially corresponds to the cross section of the receiving cylinder, such that the cross section of the piston can be modified to a limited extent, while the piston is plugged onto the receiving cylinder in the state preceding utilisation of the dispensing device.

Another document describing an applicator for automatically dispensing self-adhesive products is US20110017406, and relates to a device employed by a user for applying a self-adhesive product to a surface, which may include an outer housing configured to be gripped by the user using only one hand, the outer housing having a distal end and a volume of self-adhesive product disposed within the outer housing. An automatic dispensing mechanism is disposed within the outer housing and operatively coupled to the outer housing and the volume of self-adhesive product, the automatic dispensing mechanism being configured to advance at least one part of the self-adhesive product volume through the outer housing at the distal end in response to a manual force applied to the outer housing.

Document US8851339 is equally important in order to define the state of the art, which discloses a device for applying a self-adhesive product, wherein the device operates with at least a first step and a second step. The first step and second step being temporally separate. A device for application of a flowable product includes a first section and a second section, the first section being sized such that at least a portion of the first section fits within the second section, the first section being slidable relative to the second section. A device includes a first section having a protrusion extending from its outer surface that fits through a slot in the second section.

### Drawbacks of the prior art

The applicators mentioned above as prior art operate as a syringe, wherein a fixed portion receives a sliding portion in inside of it. When pressing the portion that slides inside the fixed portion, the contents in the applicator are poured. In a syringe, the material to be applied remains in the fixed portion, while the movable portion is pressed to expel this material. In applicators for cleaning products, such as those described in the prior art, the material to be applied may be in the fixed portion or in the movable portion, and how the two parts cooperate with each other varies. Another aspect already known is the application of fractioned amounts. This can be seen in the applicators described in documents US2648334 and US1156298.

The operation of the applicators of US20110017406 and US8851339 is based on a staggered element that is disposed in the outer section, wherein such applicators act in the same manner, that is, the outer section is pushed, such that the inner section enters the outer section in order to dispense the product; it can be said that this movement is contrary to that of a syringe, although the result is the same, that is, the product is dispensed. Document WO2004043825 also operates as such, however it admits the staggering of the inner portion, thus operating inversely of the other two, that is, the outer portion remains fixed, while the inner portion moves. This type of movement is identical to a syringe and can be seen in document FR1393720.

The product dosing system described in US20110017406 is quite complex, being provided with a spring, actuating button, guide rod, inner cap and plunger.

In document WO2004043825, the dosing system for the product to be dispensed is not practical, being provided with horizontal tears and resistance shoulders, such that the user uses both hands to actuate the device.

Document US 8851339 employs a product dosing system with outer staggering. This system is more practical than the ones described in the previous documents. However, the staggering is external with the locking button being exposed and, depending on the pressure exerted on the second section, the locking comes off. Further devices are known from EP 2 363 354 A1, CN 106 467 195 A, JP 2016 124594 A and JP 2013 091506 A. EP 2 363 354 A1 discloses a dispenser having a base body in the form of a hollow cylinder, in which a piston is supported in a sealed and slidable manner. The piston is formed opposite to a discharge opening in the base body end. An active agent is arranged between the discharge opening and the piston in the base body. A piston rod is attached at the piston on its side facing away from the discharge opening. The piston rod is provided with a part of the base body. CN 106 467 195 A discloses a pushing cylinder which comprises an outer cylinder body and an inner cylinder body. The inner cylinder body is inserted into the outer cylinder body. The inner cylinder comprises a partition board and a pipe, the partition board divides the inside of the pipe into at least two cavities, and each cavity is used for storing one kind of gel. The outer cylinder body comprises at least two push rods, and each push rod moves in the corresponding cavity in the length direction of the cavity so that the gel can be pushed out from the at least two cavities. A clamping pin is matched with a limiting groove, the release amount of the gel is precisely controlled, and the pushing cylinder is simple in structure and convenient to use.

### Proposed solution

Thus, taking the aforementioned drawbacks of the state of the art into consideration, one of the objects of the present invention is the development of a device according to claim 1 for applying self-adhesive cleaning products, the device comprising a first section called the doser, said doser being provided with an internal staggering, a second section called the applicator, the product to be dosed being placed in said second section, an internal plunger that is in contact with the product to be dosed and a protective cap.

The staggering is said to be internal since it is disposed in the doser. As the device is used, the doser is inserted into the applicator and the staggering is hidden.

The side surface of the applicator tube remains smooth without slots or openings, as occurs in the prior art patent documents. The fractioning system of the product to be dispensed is obtained by means of inner projections existing in the tube of the applicator.

### Summary of the Invention

The first section (doser) is characterised in a tube having a defined, cylindrical, hollow, and elongated perimeter being closed at one of the ends. It is formed by a base which is flat and open at one of the ends and a support closed in the opposite portion, characterised in a round handle to facilitate the application of manual force. The cylinder has an exact outer circumference in order to favour the engagement thereof into the second section. The cylinder base is flat in order to form an engagement serving as a support for the internal plunger which is positioned inside the second section (applicator). The support grip in the opposite portion facilitates handling the doser and the application of manual force by the user. In the body of the first section, two channels (grooves) extend in opposite sides in the cylinder, shaped as a guide, showing dosing and stop sections, and extend longitudinally and transversely around the body of the first section.

The second section (applicator) is characterised in a tube having a defined, cylindrical, elongated perimeter being open at the ends, one of the ends being characterised in an inverted cup-type opening having a larger diameter than the diameter of the second section itself. Between the second section and the larger opening of the second section (inverted cup), an orifice appears (herein called the dispensing tip) having a size which is smaller than the diameter of the second section, through which the material (product) will be applied. In the opposite portion, wherein a perimeter defines an internal volume, an internal plunger is inserted with one of the faces being in contact with the material (product) and, in the opposite face, there is a holding point to receive the engagement of the doser of the first section. Also in the opposite portion, in relation to the larger diameter of the second section (inverted cup), the cylindrical tube has two supports (herein called guide support) inside the tube and located on opposite sides, the shape thereof enabling the guide-shaped engagement into the two channels (grooves) of the first section. The internal diameter of the cylindrical tube of the second section is adjusted to exactly receive the cylindrical tube of the first section.

The internal plunger is inserted into the second section (applicator), defining an internal volume and, in one of the faces, makes contact with the material (product) to be inserted into the second section. It is positioned so as to ensure the safety (quality) of the internal volume (product) and is the part responsible for expelling the volume (product) after being actuated by the first section (doser). In the external circumference (lateral), two to three rings are provided which exert the highest pressure and make contact with the internal wall of the second section in order to ensure sealing of the internal chamber. On the rear, on the side making contact with the material, the internal plunger has a coupling holding point with the first section.

The protective cap is applied on the larger opening (inverted cup) of the second section (applicator). The protective cap, together with the internal plunger, ensures the safety (quality) of the internal material (product). The protective cap has a finishing for an effective engagement into the larger opening (inverted cup) of the second section, and also supports the protective cap base around the dispensing tip.

### Detailed Description of the Invention

The present invention is characterised by means of representative drawings of the device for applying self-adhesive cleaning products, such that the product can be integrally obtained by an appropriate technique, thus allowing the full characterisation of the functional nature of the requested object.

The description is based on the figures created to express the best or preferential way to manufacture the product now envisaged, by means of a detailed and consecutive numbering that clarifies aspects which can be inferred by the representation adopted, so as to clearly determine the protection now sought.

These figures are merely illustrative, and may show variations, provided that they remain within the scope initially claimed.

As such:

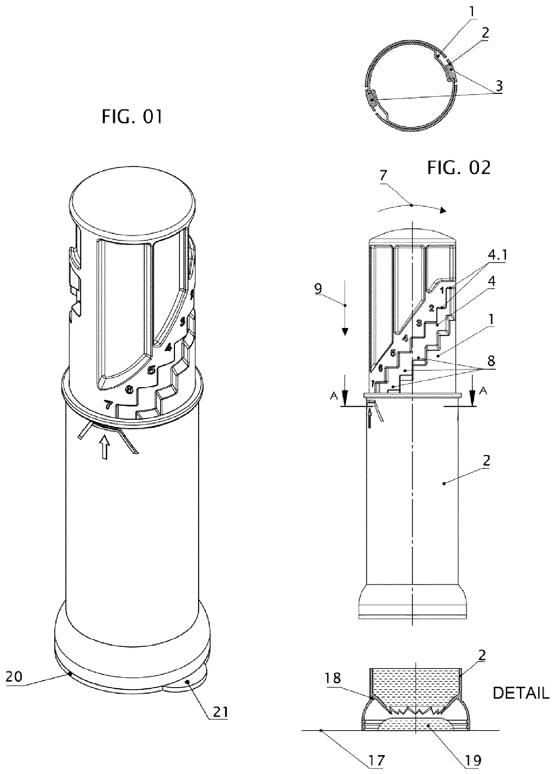

- FIGURE 1 depicts a perspective of the application device in a preferred embodiment;
- FIGURE 2 depicts a front view of the application device, cross section A-A and a detail of the end portion of the applicator;
- FIGURE 3 depicts a longitudinal section on the device in an exploded view, showing the doser, the applicator, the plunger, and the cap;
- FIGURE 4 depicts a longitudinal cross section on the device assembled;
- FIGURE 5 depicts details of the doser and;
- FIGURE 6 depicts a longitudinal cross section on the applicator only.

The first section or doser (1) is inserted into the second section or applicator (2), wherein the guides of the second section will be engaged into the two channels of the first section.

The first section or doser (1), after being inserted into the second section or applicator (2), can move in two directions, that is, rotational and longitudinal.

The longitudinal movement angle of the first section or doser (1) relative to the second section or applicator (2) is 45 degrees, while the rotational movement will be 360 degrees.

In the second section (2), with the internal plunger (23) being properly housed already, the material or product is inserted through the larger diameter opening or inverted cup (18) and through the dispensing tip (16) into the internal perimeter (15) with the internal volume being defined.

According to cross section A-A, the inner projections or guide members (3) of the second section or applicator (2), shaped as a guide, cooperate with channel (4) disposed in the first section or doser (1). The projections or guide members (3) will be responsible for guiding the first section (1) during the application of the respective doses contained in the second section (2). This application occurs by means of the longitudinal sliding (9) of the channel (4) of the first section (1) by means of the guide members of the second section (2). The doses will be expelled (applied) together (doser and applicator) by the longitudinal movement (9) to the next safety stop/stop position (4.1) of the channel (4) of the first section (1).

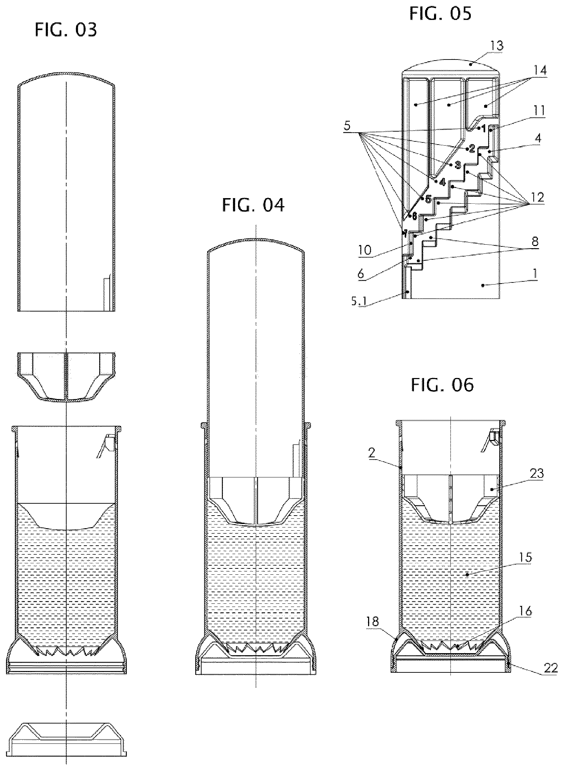

According to Fig. 5, the first section (1) has seven doses properly marked on the body of the first section (1) by means of a channel (5) for applying the material (product). According to Fig. 5, on the outer body of the first section (1), the channel (4) extends longitudinally and transversely around the first section (1) and having dosing sections (10, 11 and 12) with longitudinal movement and stop. The engagement occurs through the beginning of the channel (5) having a depth slightly deeper than the rest of the channel, thus allowing a "click" sound upon the engagement into position zero (6). In this position (6), the guide support of the second section (2) is in the initial and safety position.

For the application of the first dose (and subsequent doses) of material, the user has to make a circular movement, transversal displacement (7) in the first section (1) relative to the second section (2) in order to displace it to the free position (8). **In** the next step, the user has to apply force (9) on the first section (1) and displace it longitudinally in relation to the second section by means of the dosing channel (4) to the stop position (4.1). For a new application, the user has to place it in the free starting position of the next dose (8). Thus, the user has to follow the same steps until all the doses contained inside the second section are applied.

According to figure 5, the doses (5) are marked on the body of the first section (1) and may show measures (sizes, weights, dimensions) that are different from each other, as follows: the first dose (10) to be applied being numbered as (7) in the applicator and the last dose (11) being numbered in the applicator as (1) having a volume 37.93% and 3.45% higher, respectively, when compared to the second, third, fourth, fifth, and sixth doses (12).

The first section (1), in the opposite portion relative to the portion in contact with the internal plunger (23), has a curvature (13) for improved support during the material application movement. Additionally, it has cavities and grooves (14) for improved support during the circular movement of the first section relative to the second section.

The material deposited in the chamber of the first section (15) is expelled through the dispensing tip (16) which can have different construction designs. The application of material is carried out by resting the second section (2) on the surface that will receive the material (17). During the application, the material inside the chamber expands on the surface and the inside of the inverted cup (18). After this movement, the user may remove the assembly from the surface on which it was resting. The material will be deposited on the applied surface (19).

Before each application, the user has to remove the protective cap (20), and, for that purpose, he/she can use the flange (21) designed for assistance in this step. After applying the desired dose, the protective cap must be replaced in the second section (2). The protective cap is designed for optimum support on the dispensing tip (16) and is additionally provided with sealing rings (22) to ensure the quality of the material during the storage.

## Claims

1. A device for applying self-adhesive cleaning products, comprising a first section or doser (1) in the shape of a cylinder, a second section or applicator (2) containing a plunger (23) and a protective cap (20), a self-adhesive cleaning product to be dosed and a staggered dosing system for dispensing doses (5), wherein said staggered dosing system:
a) is disposed within said doser (1) provided with a set of positions disposed as steps and disposed so as to form two channels (4) extending in opposite sides in the cylinder, shaped as a staggered guide showing dosing and stop sections, and extending longitudinally and transversely around the body of the doser (1) wherein each of said steps corresponds to a dose (5) to be dispensed;
b) is provided with guide members (3) disposed in said applicator (2) and cooperating with the steps of the channels (4), said guide members (3) being responsible for dosing said self-adhesive cleaning product disposed within internal chamber (15) of doser (1), wherein said self-adhesive cleaning product is dispensed by a dispensing tip (16); wherein doser (1) is inserted in applicator (2) and said device can perform rotational and longitudinal movements.

2. The device for applying self-adhesive cleaning products, according to claim 1 **characterized in that** the application occurs through the longitudinal sliding (9) of the channels (4) of doser (1), through guide members (3) of applicator (2).

3. The device for applying self-adhesive cleaning products, according to claim 2, **characterized in that** the doses are expelled from the device by-longitudinal sliding (9) to the next safety stop (4.1) of the channels (4) of doser (1).

4. The device for applying self-adhesive cleaning products, according to claim 1, **characterized in that** the doses (5) are marked on the body of doser (1), the first dose (10) to be applied being numbered as (7) in applicator (2) while the last dose is numbered in applicator (2) as (1), and having a volume 37.93% and 3.45% higher, respectively, when compared to the second, third, fourth, fifth, and sixth doses (12).

5. The device for applying self-adhesive cleaning products, according to claim 4. **characterized in that** the doses have measurements (sizes, weights, dimensions) that are different from each other.

6. The device for applying self-adhesive cleaning products according to claim 1, **characterized in that** the engagement of doser (1) and applicator (2) is accomplished through the proximal end of a channel (5.1) of the doser (1) having a depth slightly deeper than the rest of the channel, thus allowing a "click" sound upon the engagement into position zero (6).

7. The device for applying self-adhesive cleaning products according to claim 1, **characterized in that** doser (1), in the opposite portion relative to the portion in contact with internal plunger (23), has a curvature (13), cavities and grooves (14).

8. The device for applying self-adhesive cleaning products according to claim 1, **characterized in that** said self-adhesive cleaning product positioned inside chamber (15) expands on the surface and the inside of an inverted cup (18) of applicator (2).

9. The device for applying self-adhesive cleaning products, according to claim 1, **characterized in that** the protective cap (20) has auxiliary flanges (21).

10. The device for applying self-adhesive cleaning products, according to claim 1, **characterized in that** the protective cap (20) has sealing rings (22).

## Patentansprüche

1. Vorrichtung zum Auftragen selbsthaftender Reinigungsprodukte, umfassend einen ersten zylinderförmigen Abschnitt oder Dosierer (1), einen zweiten Abschnitt oder Applikator (2), der einen Kolben (23) und eine Schutzkappe (20) enthält, ein zu dosierendes selbsthaftendes Reinigungsmittel und ein abgestuftes Dosiersystem für die Abgabe von Dosen (5), wobei das abgestufte Dosiersystem:
a) innerhalb des Dosierers (1) angeordnet ist und mit einer Reihe von Positionen versehen ist, die als Stufen angeordnet sind und so angeordnet sind, dass sie zwei Kanäle (4) bilden, die sich auf gegenüberliegenden Seiten des Zylinders erstrecken, in Form einer gestuften Führung mit Dosier- und Anschlagabschnitten ausgestaltet ist, und sich in Längs- und Querrichtung um den Körper des Dosierers (1) erstreckt, wobei jede der genannten Stufen einer abzugebenden Dosis (5) entspricht;
b) mit Führungselementen (3) versehen ist, die an dem Applikator (2) angeordnet sind und mit den Stufen der Kanäle (4) zusammenwirken, wobei die Führungselemente (3) für die Dosierung des selbsthaftenden Reinigungsmittels in der Innenkammer (15) des Dosierers (1) vorgesehen sind, wobei das selbsthaftende Reinigungsmittel mit Hilfe einer Spenderspitze (16) abgegeben wird;
wobei der Dosierer (1) in den Applikator (2) eingesetzt wird und die Vorrichtung Dreh- und Längsbewegungen ausführen kann.

2. Vorrichtung zum Auftragen selbsthaftender Reinigungsprodukte nach Anspruch 1, **dadurch gekennzeichnet, dass** das Auftragen über ein Längsgleiten (9) der Kanäle (4) des Dosierers (1) durch die Führungselemente (3) des Applikators (2) erfolgt.

3. Vorrichtung zum Auftragen selbsthaftender Reinigungsprodukte nach Anspruch 2, **dadurch gekennzeichnet, dass** die Dosen durch Längsgleiten (9) bis zum nächsten Sicherheitsanschlag (4.1) der Kanäle (4) des Dosierers (1) aus der Vorrichtung ausgestoßen werden.

4. Vorrichtung zum Auftragen selbsthaftender Reinigungsprodukte nach Anspruch 1, **dadurch gekennzeichnet, dass** die Dosen (5) auf dem Körper des Dosierers (1) markiert sind, wobei die erste aufzutragende Dosis (10) auf dem Applikator (2) als (7) nummeriert ist, während die letzte Dosis auf dem Applikator (2) als (1) nummeriert ist, und jeweils ein um 37,93 % und 3,45 % größeres Volumen im Vergleich zur zweiten, dritten, vierten, fünften und sechsten Dosis (12) aufweist.

5. Vorrichtung zum Auftragen selbsthaftender Reinigungsprodukte nach Anspruch 4 **dadurch gekennzeichnet, dass** die Dosen unterschiedliche Maße (Größen, Gewichte, Abmessungen aufweisen).

6. Vorrichtung zum Aufbringen selbsthaftender Reinigungsmittel nach Anspruch 1, **dadurch gekennzeichnet, dass** die Kopplung zwischen dem Dosierer (1) und dem Applikator (2) über das proximale Ende eines Kanals (5.1) des Dosierers (1) erfolgt,
der etwas tiefer ist als der Rest des Kanals, so dass beim Einrasten in der Nullstellung (6) ein Klickgeräusch zu hören ist.

7. Vorrichtung zum Aufbringen selbsthaftender Reinigungsmittel nach Anspruch 1, **dadurch gekennzeichnet, dass** der Dosierer (1) in dem dem Kontaktbereich mit dem Innenkolben (23) gegenüberliegenden Bereich eine Krümmung (13), Vertiefungen und Rillen (14) aufweist.

8. Vorrichtung zum Aufbringen selbsthaftender Reinigungsmittel nach Anspruch 1, **dadurch gekennzeichnet, dass** sich das in der Kammer (15) befindliche selbsthaftende Reinigungsmittel auf der Oberfläche und im Inneren eines umgedrehten Bechers (18) des Applikators (2) ausbreitet.

9. Vorrichtung zum Auftragen selbsthaftender Reinigungsprodukte nach Anspruch 1, **dadurch gekennzeichnet, dass** die Schutzkappe (20) Hilfslaschen (21) aufweist.

10. Vorrichtung zum Auftragen selbsthaftender Reinigungsprodukte nach Anspruch 1, **dadurch gekennzeichnet, dass** die Schutzkappe (20) Dichtungsringe (22) aufweist.

## Revendications

1. Dispositif d'application de produits de nettoyage autocollants, qui comprend une première section ou doseur (1) en forme de cylindre, une seconde section ou applicateur (2) qui contient un piston (23) et un capuchon protecteur (20), un produit de nettoyage autocollant à doser et un système de dosage échelonné pour distribuer des doses (5), dans lequel ledit système de dosage échelonné :
a) est disposé au sein dudit doseur (1) pourvu d'un ensemble de positions disposées en échelons et disposées de manière à former deux canaux (4) s'étendant sur les côtés opposés du cylindre, formé comme un guide échelonné, avec des sections de dosage et de butée, et qui s'étend longitudinalement et transversalement autour du corps du doseur (1), dans lequel chacune de ces échelons correspond à une dose (5) à distribuer ;
b) est pourvu d'éléments de guidage (3) disposés sur ledit applicateur (2) et qui coopèrent avec les échelons des canaux (4), lesdits éléments de guidage (3) étant chargés de doser le produit de nettoyage autocollant disposé au sein de la chambre interne (15) du doseur (1), dans lequel ledit produit de nettoyage auto-adhésif est distribué au moyen d'un embout de distribution (16) ;
dans lequel le doseur (1) est inséré dans l'applicateur (2) et ledit dispositif peut effectuer des mouvements rotatifs et longitudinaux.

2. Dispositif d'application de produits de nettoyage autocollants, selon la revendication 1 **caractérisé en ce que** l'application se fait par un glissement longitudinal (9) des canaux (4) du doseur (1), par les éléments de guidage (3) de l'applicateur (2).

3. Dispositif d'application de produits de nettoyage autocollants, selon la revendication 2, **caractérisé en ce que** les doses sont éjectées du dispositif par glissement longitudinal (9) jusqu'à la prochaine butée de sécurité (4.1) des canaux (4) du doseur (1).

4. Dispositif d'application de produits de nettoyage autocollants, selon la revendication 1, **caractérisé en ce que** les doses (5) sont marquées sur le corps du doseur (1), la première dose (10) à appliquer est numérotée (7) sur l'applicateur (2), tandis que la dernière dose est numérotée sur l'applicateur (2) comme (1), et a un volume de 37,93 % et 3,45 % plus élevé, respectivement, par rapport à la seconde, troisième, quatrième, cinquième et sixième doses (12).

5. Dispositif d'application de produits de nettoyage autocollants, selon la revendication 4 **caractérisé en ce que** les doses ont des mesures (tailles, poids, dimensions) qui sont différentes les unes des autres.

6. Dispositif d'application de produits de nettoyage autocollants selon la revendication 1, **caractérisé en ce que** l'accouplement du doseur (1) et de l'applicateur (2) se fait par l'extrémité proximale d'un canal (5.1) du doseur (1) ayant une profondeur légèrement supérieure à celle du reste du canal, ce qui permet d'entendre un son « clic » lors de l'accouplement en position zéro (6).

7. Dispositif d'application de produits de nettoyage autocollants selon la revendication 1, **caractérisé en ce que** le doseur (1), sur la partie opposée par rapport à la partie en contact avec le piston interne (23), a une courbure (13), des cavités et des rainures (14).

8. Dispositif d'application de produits de nettoyage autocollants selon la revendication 1, **caractérisé en ce que** ce produit de nettoyage autocollant placé au sein de la chambre (15) s'étend sur la surface et l'intérieur d'une coupelle inversée (18) de l'applicateur (2).

9. Dispositif d'application de produits de nettoyage autocollants, selon la revendication 1, **caractérisé en ce que** le capuchon de protection (20) a des languettes auxiliaires (21).

10. Dispositif d'application de produits de nettoyage autocollants, selon la revendication 1, **caractérisé en ce que** le capuchon de protection (20) a des anneaux d'étanchéité (22).
